# FASCICULE DE BREVET EUROPEEN

(11) **EP 2 248 705 B1**
(45) Date de publication et mention de la délivrance du brevet: **16.12.2015**
(21) Numéro de dépôt: 10160792.7
(22) Date de dépôt: 22.04.2010
(51) Int. Cl.: B60T 13/567

(54) **Servofrein et son procédé de fabrication.**
Bremskraftverstàrker und sein Herstellungsverfahren
Brake booster and method of manufacturing the same

(30) Priorité: 04.05.2009 FR 0902143
(43) Date de publication de la demande: 10.11.2010
(73) Titulaire: Robert Bosch GmbH, 70442 Stuttgart (DE)
(72) Inventeur: Berthomieu, Bruno, 08041, BARCELONE (ES); Simon Bacardit, Juan, 08013, Barcelone (ES); Carles, Francisco, 95470, Saint Witz (FR); Jammes, Christian, 08173, BARCELONE (ES)

(56) Documents cités:
- DE-A1- 4 038 366
- FR-A- 2 847 540

## Description

### Domaine de l'invention

La présente invention concerne un servofrein pour un système de freinage de véhicule automobile, comprenant - un cylindre moteur formé de deux coques assemblées l'une à l'autre avec interposition d'un piston à membrane, subdivisant le cylindre en deux chambres pour permettre de créer une pression différentielle appliquée au piston, - un moyeu cylindrique portant le piston et logeant une vanne actionnée par le poussoir lui-même soumis à l'action de la pédale de frein et commandant la différence de pression appliquée au piston dans le cylindre, - un ressort de rappel s'appuyant entre le cylindre et le piston logé dans le moyeu cylindrique, - une tige de poussée appuyée contre le disque de réaction du moyeu et transmettant le mouvement du piston au maître-cylindre tandem, - un manchon de support prenant appui sur l'ouverture de la coque avant côté maître-cylindre tandem et formant l'appui d'une extrémité du ressort de rappel dont l'autre extrémité appuie la tête de la tige de poussée contre le disque de réaction porté par le moyeu du piston

L'invention concerne égalent un procédé de fabrication d'un servofrein.

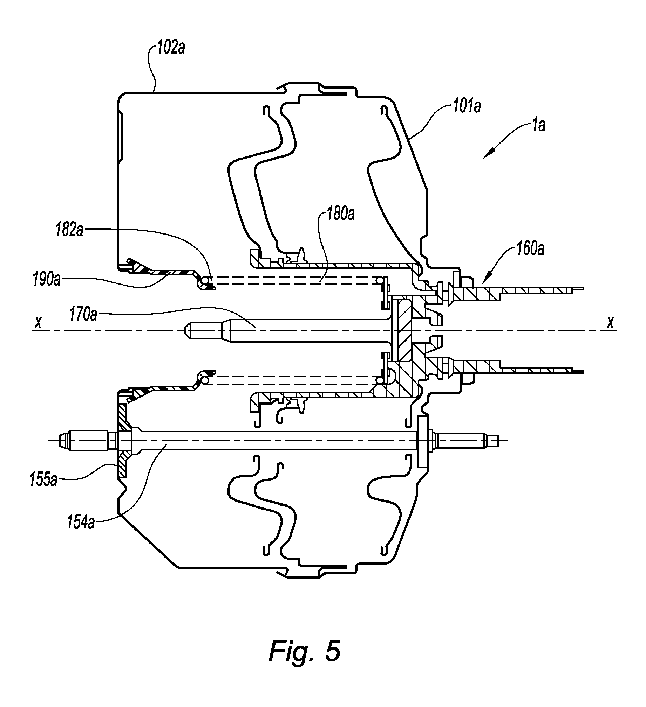

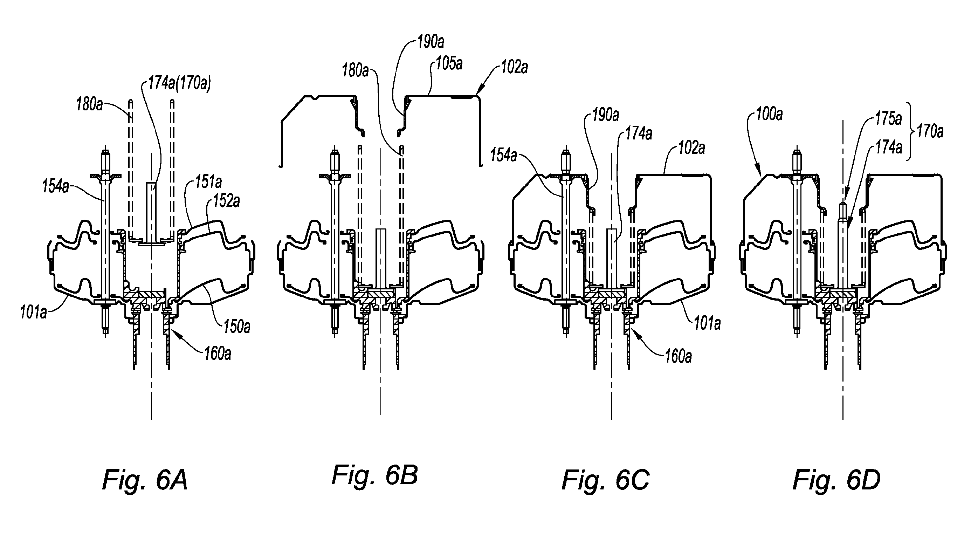

Il existe des servofreins du type défini ci-dessus comme représenté à la figure 5. Ces servofreins s'assemblent comme représenté aux figures 6A-6D et selon la description détaillée qui sera faite ensuite.

Ces servofreins connus ont l'inconvénient d'une structure et d'un montage complexes et, en particulier, de nécessiter une tige de poussée en deux parties pour compenser le saut et la côte d'interface entre le servofrein et le maître-cylindre par une tige de poussée formée de deux composants.

Ces servofreins nécessitent un procédé de montage de la première partie de la tige de poussée avant le sertissage du servofrein de sorte qu'en cas de défaut d'ajustement du saut ou de la côte d'interface entre le servofrein et le maître-cylindre, l'ensemble assemblé ne peut être récupéré et réajusté.

Le document DE 40 38 366 A1 montre un servofrein d'après le préambule de la revendication 1.

La présente invention a pour but de développer un servofrein de montage simple, permettant de façon générale d'éviter les inconvénients du montage du servofrein connu, permettant de corriger le défaut d'ajustement du saut ou de la côte d'interface entre le servofrein et le maître-cylindre et d'avoir une tige de poussée en une seule partie.

### Exposé et avantages de l'invention

A cet effet, l'invention concerne un servofrein du type défini ci-dessus caractérisé en ce que
- le manchon de support a un diamètre inférieur à celui de l'ouverture du fond de la coque avant et
- sa paroi cylindrique est munie d'épaulements escamotables pour s'engager à travers l'ouverture et s'appuyer contre l'ouverture par le déploiement des épaulement formant des butées escamotables après leur passage à travers l'ouverture.

Le procédé de montage de ce servofrein est caractérisé selon l'invention en ce qu'
- on réalise une coque arrière avec un retour bordant l'ouverture du fond et un manchon de support pour le ressort, ce manchon ayant des languettes munies d'épaulements dépassant élastiquement de la paroi cylindrique du manchon et destiné à passer dans le retour pour se bloquer contre celui-ci par les épaulements,
- on réalise un sous-ensemble formé de la coque arrière, des pistons, de la cloison, du moyeu portant les pistons et des tirants,
- on assemble la coque avant à ce sous-ensemble,
- on introduit le ressort avec la tige de poussée en une seule pièce et le manchon de support suivant l'axe du cylindre moteur, déjà assemblé,
- on comprime le ressort pour enfoncer le manchon de support et l'accrocher par les épaulements des languettes derrière le retour du fond de la coque avant, le manchon restant tenu suivant l'axe par le contact de sa paroi cylindrique avec le retour.

Ainsi, le servofrein et son procédé de fabrication selon l'invention permettent de monter la tige de poussée, le ressort de rappel après la fermeture du boîtier du servofrein en utilisant le passage nécessaire à la pénétration du maître-cylindre tandem dans le cylindre du servofrein, diamètre qui est supérieur au diamètre du ressort de rappel, de la tige de poussée et du disque de réaction.

Cela permet d'utiliser une tige de poussée en une seule pièce.

Cette structure de servofrein se traduit par une réduction du coût lié à celui des pièces qu'à la simplification du procédé de fermeture du servofrein.

Cette réduction de coûts provient également d'une diminution du taux de rejet puisque les défauts d'assemblage du servofrein connu aboutissaient au rejet du servofrein alors que, selon l'invention, le réglage peut se faire après assemblage.

Suivant une caractéristique avantageuse, l'ouverture de la coque avant est bordée intérieurement par un retour cylindrique.

Le rebord qui délimite l'ouverture, renforce celle-ci et constitue une ligne d'appui pour le manchon de support du ressort de rappel tout en tenant également ce manchon par sa surface de contact avec le retour cylindrique.

Suivant une autre caractéristique, les épaulements escamotables sont portés par des languettes découpées dans la paroi cylindrique du manchon et les épaulements sont naturellement en saillie de fenêtres de la paroi cylindrique recevant les languettes.

Cette forme de réalisation des butées escamotables est particulièrement simple.

Suivant une autre caractéristique, les épaulements sont répartis symétriquement autour de l'axe du manchon, le manchon comporte notamment trois languettes avec des épaulements.

Enfin et comme déjà indiqué, la structure du servofrein et de son procédé de montage permettent de réaliser la tige de poussée en une seule pièce.

### Dessins

La présente invention sera décrite ci-après de manière plus détaillée à l'aide d'un exemple de réalisation d'un servofrein selon l'invention représenté dans les dessins annexés et par comparaison avec un servofrein connu :
- la figure 1 est une coupe axiale schématique d'un servofrein à double piston selon l'invention,
- la figure 2 est une vue en perspective d'un manchon de support,
- les figures 3A-3D montrent quatre étapes successives caractéristiques de l'introduction du manchon de support dans le cylindre du servofrein,
- les figures 4A-4D montrent les étapes successives caractéristiques du montage d'un servofrein selon l'invention,
- la figure 5 est une coupe axiale schématique d'un servofrein de l'état de la technique,
- les figures 6A-6D sont des vues schématiques des étapes caractéristiques du montage d'un servofrein selon l'état de la technique.

### Description d'un mode de réalisation de l'invention

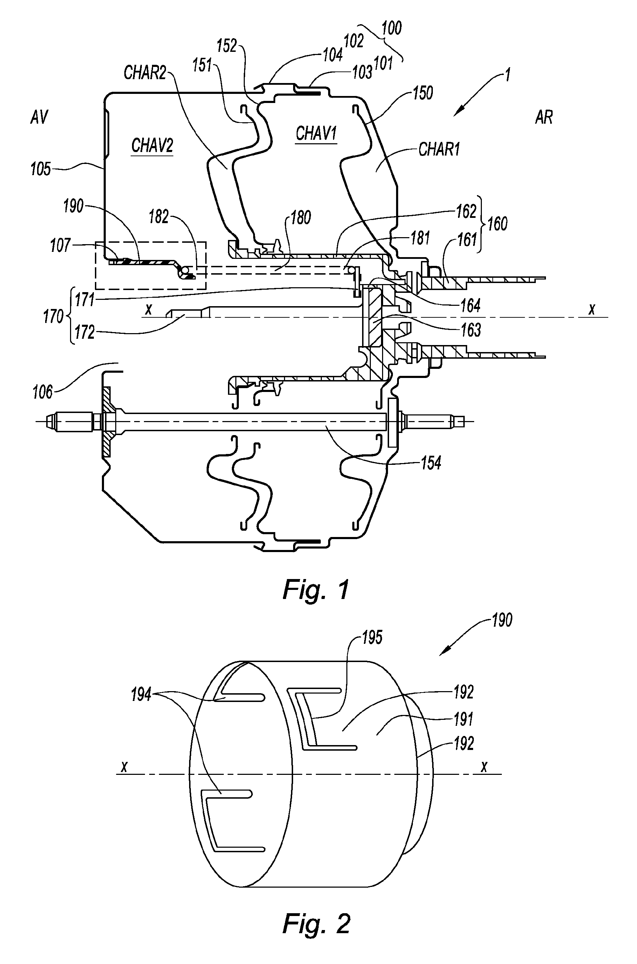

Selon la figure 1, l'invention concerne un servofrein à dépression pour un système de freins de véhicule automobile, installé devant le poussoir actionné par la pédale de frein et derrière le maître-cylindre tandem.

Par convention, le côté arrière AR par rapport au servofrein est celui vers la pédale de frein et le côté avant AV est celui tourné vers le maître-cylindre tandem.

Le servofrein 1 se compose d'un cylindre moteur 100 formé par l'assemblage d'une coque arrière 101 et d'une coque avant 102, réunies par sertissage de leurs bords 103, 104. Le cylindre moteur 100 loge un piston ou comme dans l'exemple présenté, deux pistons 150, 151 situés de part et d'autre d'une cloison fixe 152 divisant le cylindre 100 en deux cavités elles-mêmes subdivisées chacune en deux chambres chacun des pistons, une chambre avant CHAV 1, 2 et une chambre arrière CHAR 1, 2 comme cela est connu pour de tels cylindres moteurs, de façon à doubler globalement la surface exposée à la différence de pression régnant entre les deux chambres CHAV1, CHAV2 ; CHAR 1, CHAR2 lors de l'actionnement du servofrein, sans augmenter le diamètre du servofrein, c'est-à-dire son encombrement.

Le ou les pistons 150, 151 sont portés par un moyeu cylindrique 160 logé par la partie avant 162 dans le cylindre moteur 100 et en dépassant par sa partie arrière 161.

La partie arrière 161 du moyeu 160 reçoit la valve de commande de la variation de pression dans les chambres, actionnée par le poussoir à partir de la pédale de frein.

Le poussoir commande non seulement la valve mais il agit également sur la tige de poussée 170 reliée au maître-cylindre. La tige de poussée 170 est située dans la partie avant 162 du moyeu 160 et sa tête 171 s'appuie contre le disque de réaction 163 porté par le moyeu 160 dans un logement cylindrique 164, côté avant.

Les pistons 150, 151 sont soumis à l'action d'un ressort de rappel 180, hélicoïdal, venant dans la partie avant 162 du moyeu 160 en prenant appui par son extrémité arrière 181 sur le bord 165 du logement 164 du disque de réaction 163 autour de la tête 171 de la tige de poussée 170 ; le ressort 180 retient celle-ci contre le disque de réaction 163 dans son logement 164.

Le ressort de rappel 180 s'appuie par son extrémité avant 182 contre un manchon de support 190 lui-même appuyé contre un retour 107 du fond 105 de la coque avant 102, autour de son ouverture 106. Cette ouverture reçoit l'arrière du maître-cylindre tandem par ailleurs fixé de manière étanche contre le fond 105 et l'ouverture 107. Le maître-cylindre tandem connu en soi n'est pas représenté.

De façon résumée, pour une action de freinage, le mouvement du poussoir déplacé par une action sur la pédale de frein commande la valve qui casse partiellement la dépression dans les chambres arrière CHAR 1, 2 créant une différence de pression avec les chambres avant CHAV 1, 2 qui pousse les pistons 150, 151, solidaires du moyeu 160 ; cette poussée s'ajoute à celle exercée directement sur le moyeu par le poussoir. Le moyeu 160 entraîne la tige de poussée 170 qui commande ainsi le maître-cylindre tandem.

La figure 1 montre également d'autres parties du servofrein non essentielles pour la compréhension de l'invention, telles que l'un des tirants 154 traversant le cylindre moteur pour fixer du côté avant, le maître-cylindre tandem au servofrein et du côté arrière l'ensemble monté, formé par le servofrein et le maître-cylindre, contre la platine de la carrosserie du véhicule.

Certaines parties n'ont pas été représentées comme par exemple les deux membranes garnissant les voiles des pistons et rejoignant la paroi du cylindre moteur 100 dans deux logements périphériques de sertissage formés par les bords 103, 104.

La figure 2 est une vue en perspective du manchon de support 190 du ressort de rappel 180 des pistons. Il se compose d'un corps cylindrique 191 à section circulaire avec, à l'arrière, une collerette 192 de diamètre diminué pour former une couronne d'appui recevant l'extrémité avant 182 du ressort de rappel 180.

A l'avant, le corps cylindrique 191 du manchon comporte des languettes 193 découpées dans des fenêtres 194 du corps. Les languettes 193 sont réparties symétriquement à la périphérie du manchon, par exemple avec un intervalle angulaire de 120° ; les languettes 195 sont munies sur leurs faces extérieures, d'épaulements 195 dépassant du contour du cylindre.

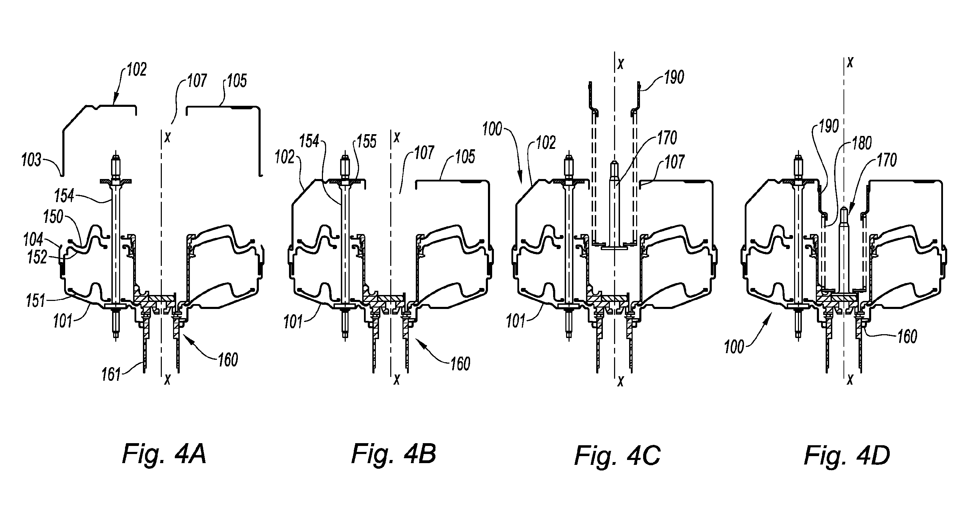

Le diamètre extérieur du manchon de support 190 est sensiblement égal au diamètre intérieur du retour 107 du fond 105 ce qui permet de glisser le manchon de support à travers ce retour, au montage du servofrein, comme cela sera vu de façon plus détaillée à l'aide des figures 4A-4D.

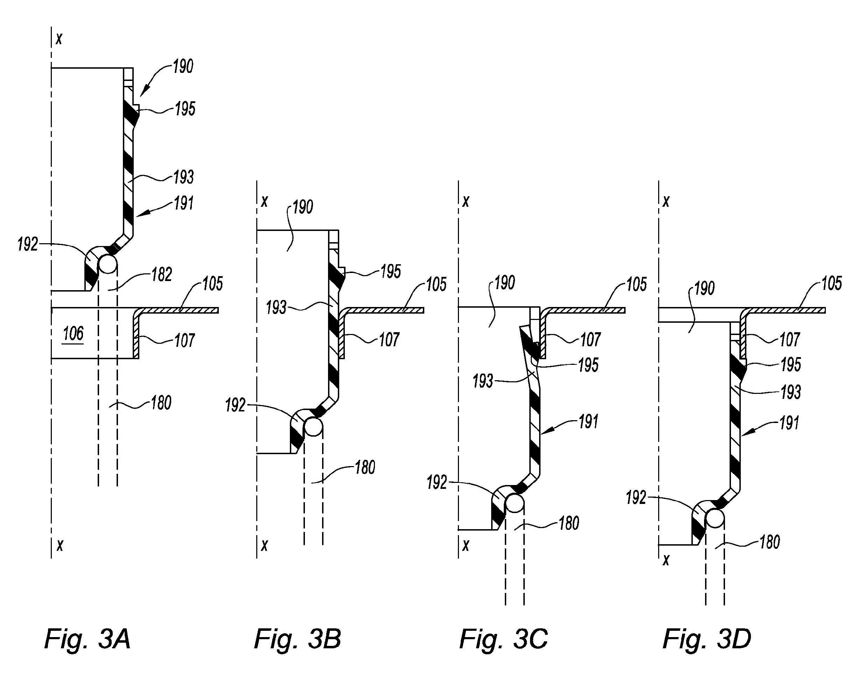

Le montage du manchon de support 190 est représenté de façon détaillée à l'aide des figures 3A-3D qui sont des demi-coupes partielles du manchon 140 et du retour 107 du fond 105 de la coque avant 102.

La figure 3A montre le manchon de support 190 portant, par sa collerette 192, l'extrémité avant 182 du ressort 180, le manchon étant présenté devant l'ouverture 106 bordée par le retour 107.

La figure 3B montre l'engagement de la paroi cylindrique 191 dans le retour 107.

La figure 3C montre l'étape suivante : l'épaulement 195 est repoussé vers l'intérieur du manchon 190 par déformation de la languette 193 pour passer dans le retour 107.

A la fin du mouvement d'enfoncement, la languette 193 reprend sa position normale dans l'alignement de la paroi cylindrique 191 et l'épaulement 195 est alors en butée contre le retour 107.

Le montage du servofrein selon l'invention sera décrit ci-après à l'aide des figures 4A-4D représentant les étapes caractéristiques. Le montage du servofrein 1 se fait de préférence avec son axe XX orienté verticalement et non horizontalement qui est la position d'utilisation du servofrein.

Selon la figure 4A, après l'assemblage préliminaire de la coque arrière 101, des pistons 150, 151 et de leur moyeu 160, de la cloison 152, des membranes des pistons et des tirants 154, on met en place la coque avant 102 sur le bord 103 de la coque arrière 101 et sur les butées étanches 155 des tirants 154.

Selon la figure 4B, on sertit les bords 103, 104 des deux coques 101, 102 ce qui termine leur assemblage, donnant un sous-ensemble sans le ressort de rappel 180, ni la tige de poussée 170.

Selon la figure 4C, on glisse à travers l'ouverture 106 de la coque avant 102, le sous-ensemble librement assemblé comprenant la tige de poussée 170, une rondelle de ressort 173 pour la tête 171 de la tige de poussée 170, le ressort de rappel 180 et le manchon de support 190 s'appuyant contre l'extrémité avant 182 du ressort 180 et pénétrant dans la première spire par son bord cylindrique formant la collerette 192.

Ce sous-ensemble est placé dans le moyeu 160, la tête de la tige de poussée 170 venant contre le disque de réaction 163.

Selon la figure 4D, on comprime le ressort 180 en poussant sur le manchon de support 190 que l'on fait passer dans l'ouverture 106. Les languettes 193 rentrent élastiquement dans le contour du cylindre du manchon 190 au passage dans le retour 107 bordant l'ouverture 106 et une fois les épaulements 195 passés dans l'ouverture 106, les languettes 143 reprennent élastiquement leur position et les épaulements 195 forment des butées venant en appui contre le bord du retour 107 ce qui termine pratiquement le montage du servofrein. Il est à remarquer que ce montage permet de réaliser la tige de poussée 170 en une seule pièce.

L'opération suivante consiste à assembler le maître-cylindre au servofrein.

A titre de comparaison et pour mieux mettre en évidence les caractéristiques du servofrein selon l'invention et de son procédé de montage, par rapport à l'état de la technique, un servofrein connu et son procédé de montage seront décrits sommairement ci-après à l'aide des figures 5 et 6A-6D en limitant la description aux différences les plus importantes par rapport à la description de l'invention faite ci-dessus.

Pour simplifier la présentation du servofrein selon l'état de la technique, on utilisera les mêmes références que pour la description du servofrein selon l'invention en les complétant par le suffixe « a ».

Ainsi selon la figure 5, le servofrein connu 1a, représenté dans les mêmes conditions que le servofrein 1 selon l'invention à la figure 1, s'en distingue par la forme du manchon de support 190a. Ce manchon cylindrique 190a, qui sert d'appui à l'extrémité avant 182a du ressort de rappel 180a, vient contre le fond 105a de la coque avant 102a, à l'intérieur de son ouverture 106a. Le manchon 190a doit être mis en place dans la coque avant 102a, préalablement à son assemblage à la coque arrière 101a.

Le procédé de montage de ce servofrein connu 1a sera décrit sommairement et à titre comparatif à l'aide des figures 5A-5D.

Le montage se fait en position verticale de l'axe XX.

Selon la figure 6A, après assemblage du sous-ensemble formé par la coque arrière 101a, les pistons 150a, 151a, la cloison 152a et le moyeu 160a ainsi que les tirants 154a, on met en place la partie arrière 174a de la tige de poussée 170a avec sa tête 171a contre le disque de réaction 163a et le ressort de rappel 180a.

Selon la figure 6B au cours d'une seconde étape après avoir fixé le manchon de support 190a contre le fond 105a de la coque avant 102a, on met en place la coque avant 102a en comprimant le ressort 180a jusqu'à ce que le bord de la coque avant 102a rejoigne le bord de la coque arrière 101a.

La figure 6C montre la position finale de la coque avant 102a et le sertissage de son bord à celui de la coque arrière 101a.

La figure 6D montre la fin de l'assemblage par la mise en place de la seconde partie 175a de la tige de poussée 170a.

### NOMENCLATURE

- 1: Servofrein
- 100: Cylindre moteur
- 101: Coque arrière
- 102: Coque avant
- 103, 104: Bords
- 105: Fond de la coque avant
- 106: Ouverture de la coque avant
- 107: Retour du fond

- 150: Piston arrière
- 151: Piston avant
- 153: Cloison fixe
- 154: Tirant
- 155: Butée étanche
- 160: Moyeu cylindrique
- 161: Partie arrière du moyeu
- 162: Partie avant du moyeu
- 163: Disque de réaction
- 164: Logement du disque de réaction

- 170: Tige de poussée
- 171: Tête de la tige de poussée
- 172: Extrémité avant de la tige de poussée
- 173: Rondelle

- 180: Ressort de rappel
- 181: Extrémité arrière du ressort
- 182: Extrémité avant du ressort
- 190: Manchon de support
- 191: Paroi cylindrique du manchon

- 192: Collerette
- 193: Languette élastique
- 194: Fenêtre
- 195: Epaulement
- AR: Côté arrière
- AV: Côté avant
- CHAR 1, 2: Chambres arrière
- CHAV 1, 2: Chambres arrière

- 1a: Servofrein connu
- 101a: Coque arrière
- 102a: Coque avant
- 105a: Fond de la coque avant
- 106a: Ouverture du fond de la coque avant

- 150a, 151a: Pistons
- 152a: Cloison
- 160a: Moyeu
- 163a: Disque de réaction

- 170a: Tige de poussée
- 171a: Tête de la tige de poussée
- 174a: Partie arrière de la tige de poussée
- 175a: Partie avant de la tige de poussée

- 180a: Ressort de rappel
- 182a: Extrémité avant du ressort de rappel
- 190a: Manchon de support

## Revendications

1. Servofrein à dépression pour un système de freinage de véhicule automobile, comprenant
- un cylindre moteur (100) formé de deux coques (101, 102) assemblées l'une à l'autre avec interposition d'un piston à membrane (150, 151), subdivisant le cylindre (100) en deux chambres pour permettre de créer une pression différentielle appliquée au piston,
- un moyeu cylindrique (160) portant le piston et logeant une vanne actionnée par le poussoir lui-même soumis à l'action de la pédale de frein et commandant la différence de pression appliquée au piston dans le cylindre (100),
- un ressort de rappel (180) s'appuyant entre le cylindre (100) et le piston (150, 151) logé dans le moyeu cylindrique (160),
- une tige de poussée (170) appuyée contre le disque de réaction (163) du moyeu (160) et transmettant le mouvement du piston au maître-cylindre tandem,
- un manchon de support (190) prenant appui sur l'ouverture de la coque avant (102) côté maître-cylindre tandem et formant l'appui d'une extrémité (182) du ressort de rappel (180) dont l'autre extrémité (181) appuie la tête (171) de la tige de poussée (170) contre le disque de réaction (163) porté par le moyeu (160) du piston,
**caractérisé en ce que**
- le manchon de support (190) a un diamètre inférieur à celui de l'ouverture (106) du fond (105) de la coque avant (102) et
- sa paroi cylindrique (191) est munie d'épaulements escamotables (195) pour s'engager à travers l'ouverture (106) et s'appuyer contre l'ouverture (106) par le déploiement des épaulements (195) formant des butées escamotables après leur passage à travers l'ouverture (106).

2. Servofrein selon la revendication 1, caractérisé en ce quel'ouverture (106) de la coque avant (102) est bordée intérieurement par un retour cylindrique (107).

3. Servofrein selon la revendication 1, caractérisé en ce queles épaulements escamotables (195) sont portés par des languettes (193) découpées dans la paroi cylindrique (191) du manchon et les épaulements (195) sont naturellement en saillie de fenêtres (194) de la paroi cylindrique recevant les languettes.

4. Servofrein selon la revendication 1,
**caractérisé en ce que**
les épaulements (196) sont répartis symétriquement autour de l'axe (XX) du manchon (190), le manchon comporte notamment trois languettes (193) avec des épaulements (195).

5. Servofrein selon la revendication 1,
**caractérisé en ce que**
la tige de poussée (170) est en une seule pièce.

6. Procédé de fabrication d'un servofrein selon l'une quelconque des revendications 1 à 5,
**caractérisé en ce qu'**
- on réalise une coque arrière avec un retour (107) bordant l'ouverture (106) du fond (105) et un manchon de support (190) pour le ressort (180), ce manchon ayant des languettes (193) munies d'épaulements (195) dépassant élastiquement de la paroi cylindrique (191) du manchon (190) et destiné à passer dans le retour (107) pour se bloquer contre celui-ci par les épaulements (195),
- on réalise un sous-ensemble formé de la coque arrière (101), des pistons (150, 151), de la cloison (153), du moyeu (160) portant les pistons et des tirants (154),
- on assemble la coque avant (102) à ce sous-ensemble,
- on introduit le ressort (180) avec la tige de poussée (170) en une seule pièce et le manchon de support (190) suivant l'axe (XX) du cylindre moteur (100), déjà assemblé,
- on comprime le ressort (180) pour enfoncer le manchon de support (190) et l'accrocher par les épaulements (195) des languettes (193) derrière le retour (107) du fond (105) de la coque avant (102), le manchon restant tenu suivant l'axe (XX) par le contact de sa paroi cylindrique (191) avec le retour (107).

## Patentansprüche

1. Unterdruck-Bremskraftverstärker für ein Kraftfahrzeug-Bremssystem, der enthält
- einen Antriebszylinder (100), der von zwei Schalen (101, 102) gebildet wird, die mit Zwischenfügung eines Membrankolbens (150, 151) zusammengebaut werden, der den Zylinder (100) in zwei Kammern teilt, um die Erzeugung eines an den Kolben angewendeten Differentialdrucks zu ermöglichen,
- eine zylindrische Nabe (160), die den Kolben trägt und in der ein Ventil untergebracht ist, das vom Stößel betätigt wird, der selbst der Betätigung des Bremspedals unterworfen ist und die an den Kolben im Zylinder (100) angewendete Druckdifferenz steuert,
- eine zwischen dem Zylinder (100) und dem Kolben (150, 151) angelegte Rückstellfeder (180), die in der zylindrischen Nabe (160) untergebracht ist,
- eine Schubstange (170), die gegen die Reaktionsscheibe (163) der Nabe (160) anliegt und die Bewegung des Kolbens an den Tandem-Hauptzylinder überträgt,
- eine Stützmuffe (190), die auf der Öffnung der vorderen Schale (102) auf der Seite des Tandem-Hauptzylinders aufliegt und die Auflage eines Endes (182) der Rückstellfeder (180) bildet, deren anderes Ende (181) den Kopf (171) der Schubstange (170) gegen die von der Nabe (160) des Kolbens getragenen Reaktionsscheibe (163) anlegt,
**dadurch gekennzeichnet, dass**
- die Stützmuffe (190) einen kleineren Durchmesser als derjenige der Öffnung (106) des Bodens (105) der vorderen Schale (102) hat, und
- ihre zylindrische Wand (191) mit Schultern (195) versehen ist, die einziehbar sind, um durch die Öffnung (106) eingeführt zu werden und gegen die Öffnung (106) durch das Ausklappen der Schultern (195) anzuliegen, die nach ihrem Durchgang durch die Öffnung (106) einziehbare Anschläge formen.

2. Bremskraftverstärker nach Anspruch 1, **dadurch gekennzeichnet, dass** die Öffnung (106) der vorderen Schale (102) innen von einer zylindrischen Umbiegung (107) umrandet wird.

3. Bremskraftverstärker nach Anspruch 1, **dadurch gekennzeichnet, dass** die einziehbaren Schultern (195) von Zungen (193) getragen werden, die in der zylindrischen Wand (191) der Muffe ausgeschnitten werden, und die Schultern (195) natürlich von Fenstern (194) der zylindrischen Wand vorstehen, die die Zungen aufnehmen.

4. Bremskraftverstärker nach Anspruch 1, **dadurch gekennzeichnet, dass** die Schultern (196) symmetrisch um die Achse (XX) der Muffe (190) verteilt sind, wobei die Muffe insbesondere drei Zungen (193) mit Schultern (195) aufweist.

5. Bremskraftverstärker nach Anspruch 1, **dadurch gekennzeichnet, dass** die Schubstange (170) aus einem Stück ist.

6. Verfahren zur Herstellung eines Bremskraftverstärkers nach einem der Ansprüche 1 bis 5, **dadurch gekennzeichnet, dass**
- eine hintere Schale mit einer die Öffnung (106) des Bodens (105) umrandenden Umbiegung (107) und eine Stützmuffe (190) für die Feder (180) hergestellt werden, wobei diese Muffe Zungen (193) hat, die mit Schultern (195) versehen sind, welche elastisch von der zylindrischen Wand (191) der Muffe (190) vorstehen, und dazu bestimmt ist, in die Umbiegung (107) überzugehen, um sich gegen diese durch die Schultern (195) zu blockieren,
- eine von der hinteren Schale (101), den Kolben (150, 151), der Trennwand (153), der die Kolben und Zugstangen (154) tragenden Nabe (160) geformte Teileinheit hergestellt wird,
- die vordere Schale (102) mit dieser Teileinheit zusammengefügt wird,
- die Feder (180) mit der Schubstange (170) in einem Stück und die Stützmuffe (190) gemäß der Achse (XX) des bereits zusammengefügten Antriebszylinders (100) eingeführt werden,
- die Feder (180) komprimiert wird, um die Stützmuffe (190) einzudrücken und sie durch die Schultern (195) der Zungen (193) hinter der Umbiegung (107) des Bodens (105) der vorderen Schale (102) einzuhaken, wobei die Muffe gemäß der Achse (XX) durch den Kontakt ihrer zylindrischen Wand (191) mit der Umbiegung (107) gehalten bleibt.

## Claims

1. Vacuum brake booster for a motor vehicle braking system, comprising
- a drive cylinder (100) formed by two shells (101, 102) assembled to one another with interposition of a diaphragm piston (150, 151) subdividing the cylinder (100) into two chambers in order to make it possible to create a differential pressure applied to the piston,
- a cylindrical hub (160) bearing the piston and housing a valve actuated by the pusher, itself subjected to the action of the brake pedal and controlling the pressure difference applied to the piston in the cylinder (100),
- a return spring (180) bearing between the cylinder (100) and the piston (150, 151) housed in the cylindrical hub (160),
- a thrust rod (170) pressed against the reaction disc (163) of the hub (160) and transmitting the movement of the piston to the tandem master cylinder,
- a support sleeve (190) bearing on the opening in the front shell (102) on the tandem master cylinder side and forming the bearing point for one end (182) of the return spring (180), the other end (181) of which presses the head (171) of the thrust rod (170) against the reaction disc (163) borne by the hub (160) of the piston,
**characterized in that**
- the support sleeve (190) has a diameter which is less than that of the opening (106) in the bottom (105) of the front shell (102) and
- its cylindrical wall (191) is provided with retractable shoulders (195) in order to engage through the opening (106) and bear against the opening (106) by the deployment of the shoulders (195) forming retractable stops after their passage through the opening (106).

2. Brake booster according to Claim 1, **characterized in that** the opening (106) in the front shell (102) is bordered internally by a cylindrical return (107).

3. Brake booster according to Claim 1, **characterized in that** the retractable shoulders (195) are borne by tongues (193) cut into the cylindrical wall (191) of the sleeve and the shoulders (195) naturally project from slots (194) in the cylindrical wall receiving the tongues.

4. Brake booster according to Claim 1, **characterized in that** the shoulders (196) are distributed symmetrically about the axis (XX) of the sleeve (190), the sleeve comprising in particular three tongues (193) with shoulders (195).

5. Brake booster according to Claim 1, **characterized in that** the thrust rod (170) is in one piece.

6. Method for manufacturing a brake booster according to any one of Claims 1 to 5, **characterized by**
- producing a rear shell with a return (107) bordering the opening (106) in the bottom (105) and a support sleeve (190) for the spring (180), this sleeve having tongues (193) provided with shoulders (195) protruding elastically from the cylindrical wall (191) of the sleeve (190) and intended to pass into the return (107) in order to be blocked against the latter by the shoulders (195),
- producing a subassembly formed by the rear shell (101), pistons (150, 151), the partition (153), the hub (160) bearing the pistons and tie rods (154),
- assembling the front shell (102) to this subassembly,
- introducing the spring (180) with the one-piece thrust rod (170) and the support sleeve (190) along the axis (XX) of the drive cylinder (100), already assembled,
- compressing the spring (180) in order to push in the support sleeve (190) and attach it by the shoulders (195) of the tongues (193) behind the return (107) of the bottom (105) of the front shell (102), the sleeve remaining held along the axis (XX) by contact of its cylindrical wall (191) with the return (107).
